# EUROPÄISCHE PATENTSCHRIFT

(11) **EP 2 106 377 B1**
(45) Veröffentlichungstag und Bekanntmachung des Hinweises auf die Patenterteilung: **04.08.2010**
(21) Anmeldenummer: 07845280.2
(22) Anmeldetag: 06.12.2007
(51) Int. Cl.: B65G 59/04

(54) **VORRICHTUNG ZUM VEREINZELN PLATTENFÖRMIGER GEGENSTÄNDE**
APPARATUS FOR SEPARATING PLATE-SHAPED OBJECTS
DISPOSITIF POUR SÉPARER DES ARTICLES SOUS FORME DE PLAQUES

(30) Priorität: 04.01.2007 AT 202007
(43) Veröffentlichungstag der Anmeldung: 07.10.2009
(73) Patentinhaber: BM-Battery Machines GmbH, 8273 Ebersdorf 226 (AT)
(72) Erfinder: SCHWETZ, Anton, 8273 Ebersdorf (AT)
(74) Vertreter: Hehenberger, Reinhard
(86) Internationale Anmeldenummer: PCT/AT2007/000551
(87) Internationale Veröffentlichungsnummer: WO 2008/080179

(56) Entgegenhaltungen:
- WO-A-2006/005089
- DE-A1- 3 202 087
- US-A1- 2003 012 636

## Beschreibung

Die Erfindung betrifft eine Vorrichtung mit den Merkmalen des einleitenden Teils von Anspruch 1 (vgl. DE 32 02 087 A).

Vorrichtungen zum Vereinzeln plattenförmiger Gegenstände, insbesondere von Batterie- oder Akkumulatorplatten, aus Stapeln plattenförmiger Gegenstände sind bekannt.

In älteren Vorschlägen für Vorrichtungen zum Entnehmen von Batterieplatten aus Stapeln von Batterieplatten (vgl. AT 241 565 B, AT 329 124 B und AT 352 198 B) sind die Batterieplatten in im wesentlichen lotrechten Stapeln, in welchen die Platten im wesentlichen horizontal ausgerichtet sind, angeordnet und werden von unten aus dem Stapel entnommen. Dies ist wegen des auf der jeweils untersten Platte lastenden Gewichts des Stapels problematisch, da es vorkommt, dass die Batterieplatten aneinander haften und nicht ohne weiteres einzeln entnommen werden können.

Es sind daher auch schon Vorrichtungen vorgeschlagen worden, in welchen den Batterieplatten einer Entnahmestelle im wesentlichen lotrecht stehend, in horizontal ausgerichteten Stapeln zugeführt werden.

Beispielhaft wird auf die EP 0 141 806 B, die EP 0 608 678 A und die AT 405 824 B verwiesen. Bei diesen bekannten Vorrichtungen werden die zu vereinzelnden Platten im wesentlichen lotrecht stehend in horizontal ausgerichteten Stapeln einer Vereinzelungsvorrichtung mit einem Greifer zugeführt, der Platten einzeln aus dem Stapel entnimmt. Dies bedingt eine aufwendige Kinematik des Greifers, der Platten einzeln aus dem Stapel entnimmt und auf ein Förderband ablegt.

Nachteilig bei diesen bekannten Vorrichtungen ist es, dass sie wegen der komplizierten Bewegungen der Entnahmegreifer, welche die Platten einzeln aus horizontalen Stapeln entnehmen sollen, hinsichtlich ihrer Leistungsfähigkeit begrenzt sind.

Bekannt sind auch Vorrichtungen zum Vereinzeln plattenförmiger Gegenstände, insbesondere Batterie- oder Akkumulatorplatten, bei welchen die plattenförmigen Gegenstände horizontal ausgerichtet sind, und bei welchen die Gegenstände von oben aus dem Stapel entfernt werden.
Vorrichtungen dieser Bauart sind aus der DE 32 02 087 A, der EP 0 445 496 A oder der WO 2006/005089 A bekannt.

Dabei arbeiten Vorrichtungen, die aus der DE 32 02 087 A und EP 0 445 496 A bekannt sind, mit Förderbändern, die mit Saugern bestückt sind, und welche jeweils den obersten Gegenstand eines Stapels aus plattenförmigen Gegenständen entweder unmittelbar vom Stapel aufnehmen (DE 32 02 087 A) oder durch horizontales Verschieben zugeführte Gegenstände (EP 0 445 496 A) aufnehmen und zu einem nachgeordneten Förderband transportieren.

In der WO 2006/005089 A ist eine Vorrichtung beschrieben, bei welcher zum Abheben des jeweils obersten plattenförmigen Gegenstandes eine Einrichtung zum Entnehmen einzelner Gegenstände von einem Stapel vorgesehen ist, die vom Stapel abgehobenen plattenförmigen Gegenständen auf ein ihr zugeordnetes Flügelförderband ablegt. Von diesem Flügelförderband werden die Platten an einen weiteren Förderer abgegeben, der plattenförmigen Gegenstände zur weiteren Bearbeitung nachgeschalteten Stationen, z. B. Anordnungen zum Bürsten der Fahnen, wenn es sich um Batterie- oder Akkumulatorplatten handelt, zuführt.

Mit der in der DE 32 02 087 A beschriebenen Vorrichtung wird ein lotrechter Stapel von oben her abgearbeitet, wobei beim Abheben von Platten vom Stapel eine nach oben gerichtete Bewegung ausgeführt wird. Zum Abarbeiten ist ein Endlosförderband mit daran befestigten, mit Unterdruck beaufschlagten Saugköpfen vorgesehen. Dieses Förderband transportiert abgenommene Platten (einzeln) zu einem weiteren Förderer, mit dem vereinzelte Platten abtransportiert werden. Die eine Umlenkrolle des Förderbandes mit den Saugköpfen, nämlich die Umlenkrolle, die im Bereich des Stapels angeordnet ist, ist in einem Schlitten auf und ab verschiebbar gelagert. So wird beim Abheben des obersten Gegenstandes eine nach oben gerichtete Bewegung ausgeführt. Bei der aus der DE 32 02 087 A bekannten Vorrichtung ist der als Plattenleger dienenden Fördereinrichtung abgabeseitig ein weiteres Förderband zugeordnet, wobei die Fördereinrichtung und das Förderband einander überlappend angeordnet sind. Von diesem Stand der Technik geht die Erfindung aus.

Alle bekannten Vorrichtungen, insbesondere die der EP 0 445 596 A oder der WO 2006/005089 A arbeiten, an sich zufriedenstellend, werden jedoch gesteigerten Anforderungen hinsichtlich immer kürzerer Taktzeiten und einem vereinfachten und sicheren. Aufbau nicht im vollen Ausmaß gerecht.

Der Erfindung liegt die Aufgabe zu Grunde, eine Vorrichtung der eingangs genannten Gattung anzugeben, mit welcher beim Entnehmen von plattenförmigen Gegenständen, insbesondere (Blei-)Platten für Batterien und Akkumulatoren, aus Stapeln kürzere Taktzeiten möglich sind.

Gelöst wird diese Aufgabe erfindungsgemäß mit einer Vorrichtung, welche die Merkmale von Anspruch 1 aufweist.

Bevorzugte und vorteilhafte Ausgestaltungen der Erfindung sind Gegenstand der Unteransprüche.

Da bei der erfindungsgemäßen Vorrichtung der jeweils oberste plattenförmige Gegenstand aus einem Stapel im wesentlichen horizontal liegender, plattenförmiger Gegenstände, welcher Stapel im wesentlichen lotrecht ausgerichtet ist, entnommen wird, ist eine einfache Bewegung des Entnahmegreifers ("Plattenleger") möglich. Dadurch können beim Vereinzeln von plattenförmigen Gegenständen aus Stapeln solcher plattenförmiger Gegenstände und beim Übergeben der vereinzelten plattenförmigen Gegenständen an Fördereinrichtungen kurze Taktzeiten erzielt werden.

In einer bevorzugten Ausführungsform ist der als Entnahmegreifer vorgesehene Plattenleger als Förderband ausgebildet, an dem zwei oder mehrere Gruppen von Saugern vorgesehen sind, die zum Aufnehmen von plattenförmigen Gegenständen mit Unterdruck beaufschlagt sind und so lange mit Unterdruck beaufschlagt bleiben, bis die plattenförmigen Gegenstände an einen nachgeschalteten Förderer abgegeben werden.

Insbesondere ist die erfindungsgemäße Vorrichtung für das Vereinzeln von in Stapeln herangeförderten Batterie- oder Akkumulatorplatten geeignet, wobei die vereinzelten Platten dann einer weiteren Bearbeitung, beispielsweise dem Bürsten der Kontaktfahnen, und Vorrichtungen zum Eintaschen von Batterie- oder Akkumulatorplatten zugeführt werden können.

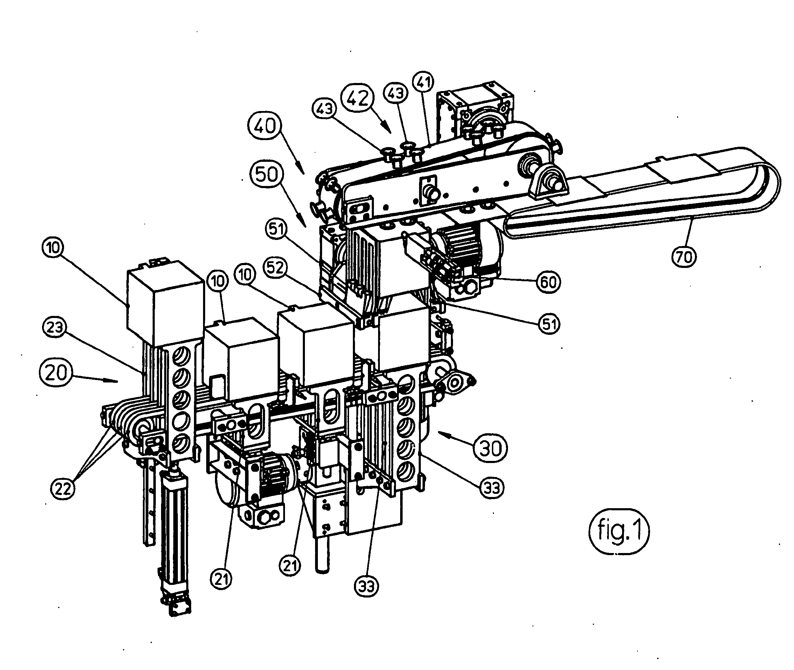

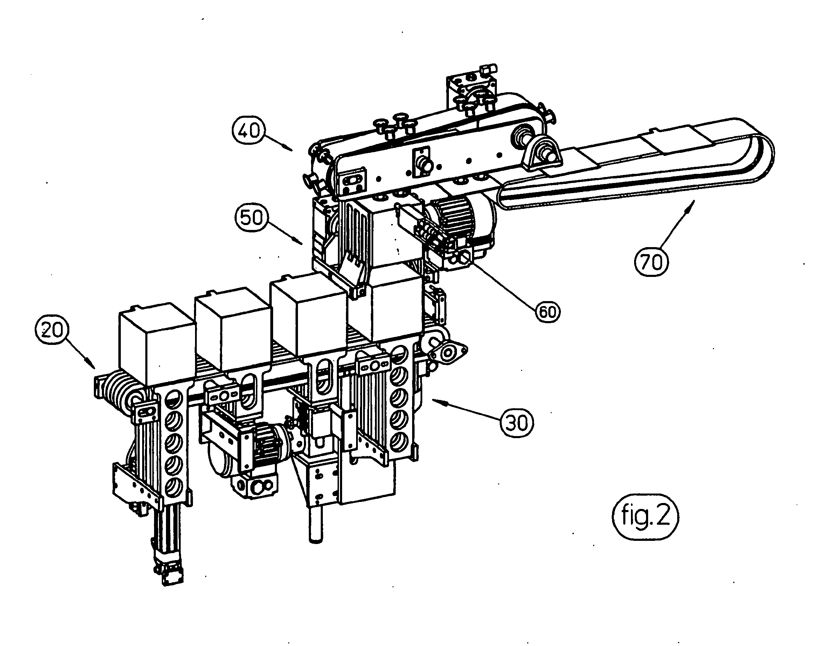

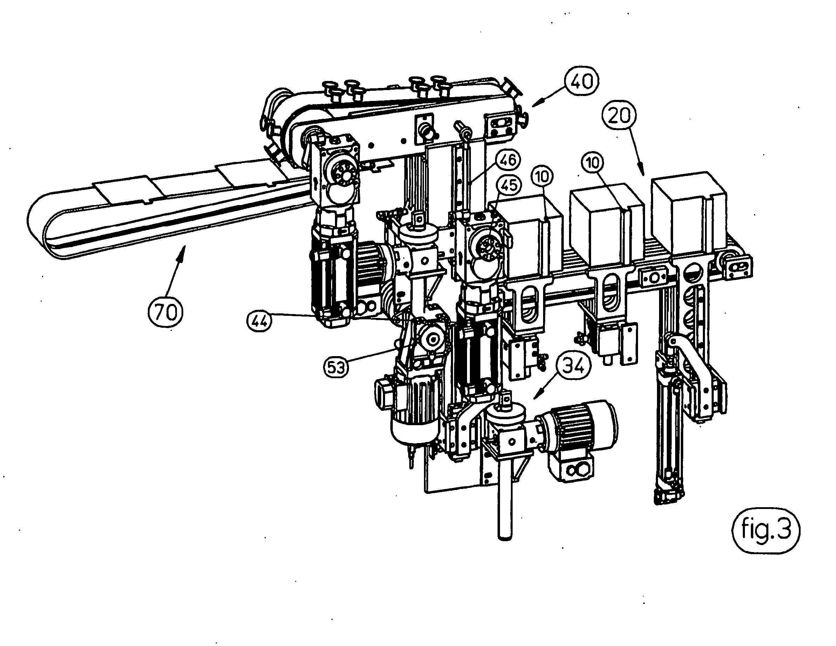

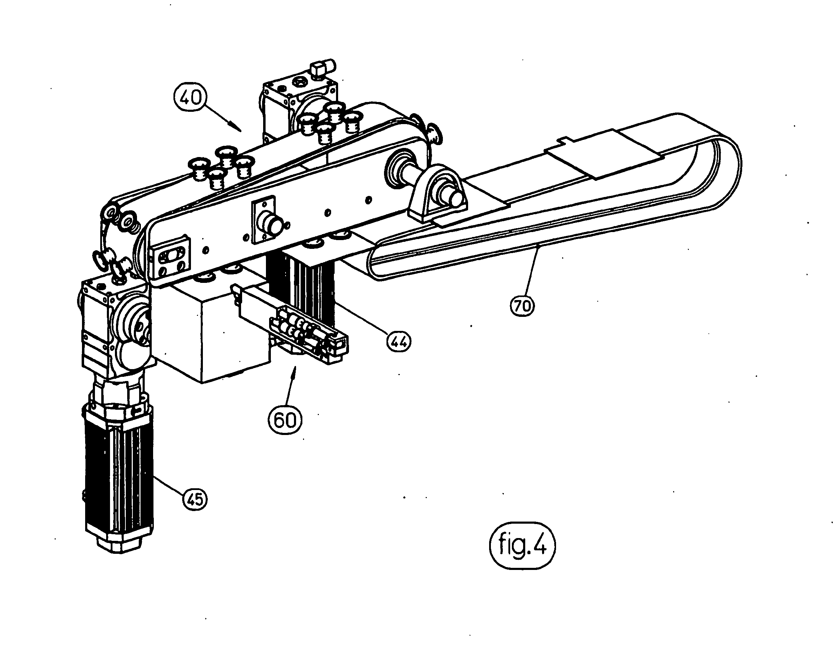

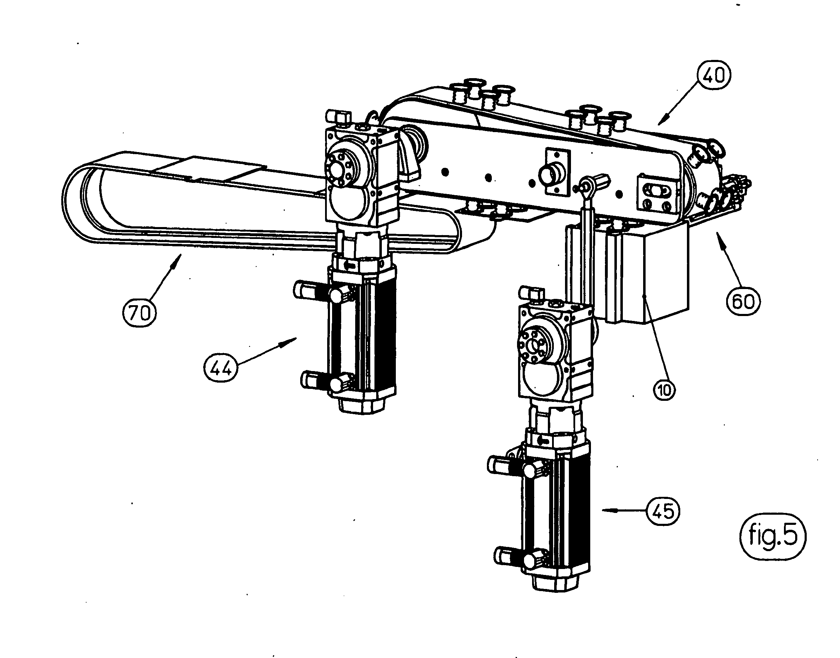

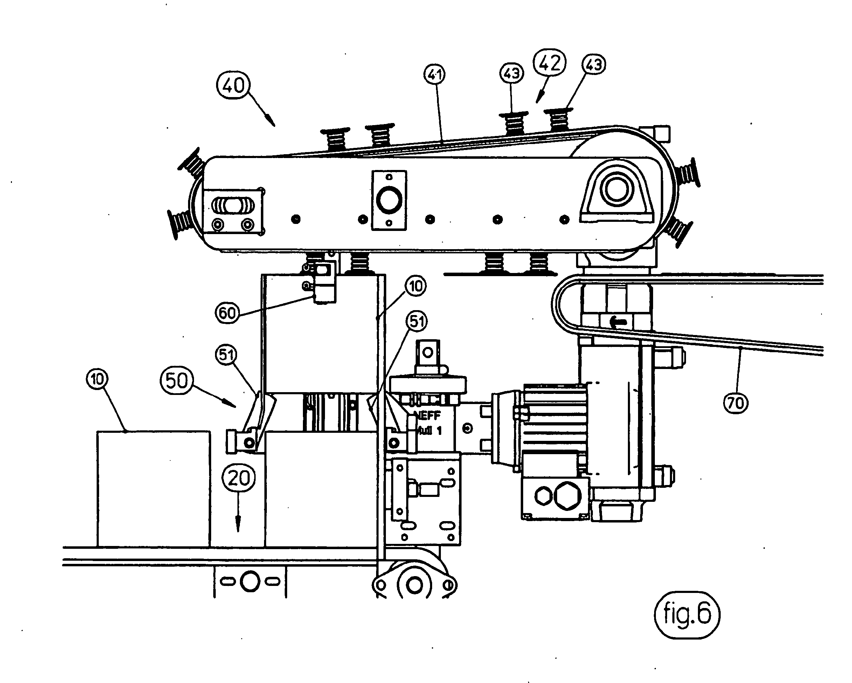

Weitere Einzelheiten, Merkmale und Vorteile der erfindungsgemäßen Vorrichtung ergeben sich aus der nachstehenden Beschreibung eines bevorzugten Ausführungsbeispiels anhand der Zeichnungen. Es zeigt: Fig. 1 schematisiert eine erfindungsgemäße Vorrichtung mit symbolisiert dargestellten Stapeln oder Paketen aus (Batterie-)Platten in Schrägansicht, Fig. 2 die Vorrichtung aus Fig. 1 in einer anderen Arbeitsstellung, Fig. 3 die Vorrichtung der Fig. 1 und 2 von der anderen Seite her gesehen, Fig. 4 eine Einzelheit der Vorrichtung im Bereich des Plattenlegers, Fig. 5 die Einzelheit der Vorrichtung aus Fig. 4 von der anderen Seite her gesehen und Fig. 6 die Einzelheit der Vorrichtung aus Fig. 4 in anderer Seitenansicht.

Plattenstapel 10 (Höhe von 4" bis 6") werden auf einem Horizontalförderer 20 (vorzugsweise eine Kettenfördereinrichtung) manuell oder automatisch positioniert. Auf dem Horizontalförderer 20 sind in der Teilung der Stapelabstände beispielsweise pneumatisch betriebene Aushebeeinheiten 21 positioniert, welche Plattenstapel 10 vom Horizontalförderer 20 abheben können. Somit ist gewährleistet, dass auf jedem Teilungsplatz ein Plattenstapel 10 vorhanden ist und möglichst schnell der jeweilige Plattenstapel 10 auf den Hebetisch 30 (unten) einer Hebeeinrichtung nachgefördert wird.

Der Hebetisch 30 fördert (hebt) den Plattenstapel 10 senkrecht nach oben, bis ein Sensor die Oberkante des Plattenstapels 10 erkennt und die Bewegung des Hebetisches 30 absteuert. Platten werden nun einzeln durch einen Plattenleger 40, z.B. einen Vakuum-Saugerband-Plattenleger, vom Plattenstapel 10 abgenommen (Funktionsbeschreibung weiter unten). Dabei fördert der Hebetisch 30 den verbleibenden Plattenstapel 10 nach, damit die Oberkante des Plattenstapels 10 immer dieselbe Position, in welcher der Plattenleger 40 die jeweils oberste Platte aus einem Plattenstapel 10 entnehmen kann, aufweist.

Wenn ein Plattenstapel 10 soweit abgearbeitet ist, dass dessen Unterkante durch das schrittweise Anheben des Plattenstapels 10 eine bestimmte Position erreicht hat, klappen zwei einander gegenüberliegende, federbelastete Halteklappen 51 eines weiteren Hebetisches 50 (oben), nach innen aus. Sensoren, welche die Schwenkstellung der Halteklappen 51 abfragen, schalten nun den oberen Hebetisch 50, welcher dadurch das Nachsetzen der Plattenstapel-Oberkante durch fortgesetztes schrittweises Anheben des Plattenstapels 10 übernimmt. Derweilen kann der untere Hebetisch 30 nach unten fahren, den nächsten Plattenstapel 10 vom Horizontalförderer 20 aufnehmen und diesen nach oben fördern.

Wenn sich die Oberkante des vom unteren Hebetisch 30 nachgeförderten Plattenstapels 10 den Halteklappen 51 am oberen Hebetisch 50 nähert, drückt der Plattenstapel 10 mit seiner obersten Platte die Halteklappen 51 nach außen und der obere Plattenstapel 10 setzt sich auf den nachgeförderten Plattenstapel 10 ab. Die Sensoren, die die Stellung der Halteklappen 51 abfragen, schalten nun den Hebetisch 30, welcher dadurch das Nachsetzen der Plattenstapel-Oberkante durch Heben des Plattenstapel 10 übernimmt. Der Hebetisch 50 fährt nach unten in seine Warteposition. Diese Bewegungsabfolge beginnt nun von vorne.

Um die exakte Abnahme einzelner Platten vom Plattenstapel 10 zu gewährleisten, wird eine Plattenvereinzelung 60 eingesetzt. Diese wird weiter unten beschrieben.

Der Plattenleger 40 ("Entnahmegreifer") ist mit einem umlaufenden Band 41 (Förderer), das mit Gruppen 42 (Saugerköpfe) von bevorzugt je vier Saugern 43 ausgestattet ist, ausgestattet. Die Bewegung und die Schwenkbewegung des Bandes 41 wird vorzugsweise mit jeweils einem Servoantrieb (Motoren 44, 45) bewirkt. Der Plattenleger 40 kann vom Antrieb 45, zwischen einer Stellung, in der er mit seinem oberhalb der Hebetische 30 und 50 liegenden Enden dem oberen Ende des Plattenstapels 10, der gerade abgearbeitet wird, angenähert und einer Stellung, in welcher er vom oberen Ende des Plattenstapels 10 entfernt ist, hin und her geschwenkt werden. Zunächst schwenkt der Plattenleger 40 (dessen Band 41) nach unten (ca. 15mm im Bereich des Plattenstapels 10), nimmt mit einer Gruppe 42 aus vakuumbeaufschlagten Saugern 43 eine Platte auf und schwenkt nach oben. Während des Schwenkens nach oben startet der Vorschub (Antrieb 44), und das Band 41 des Plattenlegers 40 transportiert die Platte um eine Teilung des Plattenlegers 40 weiter. Dann stoppt das Band 41 des Plattenlegers 40 wieder. Nun befindet sich die Platte kurz vor dem aufgabeseitigen Ende des Förderbandes 70 ("Klemmband")einer nachgeordneten Fördereinrichtung. Das aufgabeseitige Ende des Förderbandes 70 befindet sind unterhalb des abgabeseitigen Endes des Bandes 41 des Plattenlegers 40. Der Plattenleger 40 schwenkt wieder nach unten, nimmt die nächste Platte vom Plattenstapel 10 auf, schwenkt nach oben und startet wiederum den Vorschub. Die erste aufgenommene Platte wird jetzt auf das Förderband 70 übergeben, wobei die Vorschubbewegungen des Bandes 41 des Plattenlegers 40 und der des Förderbandes 70 bei der Übergabe der Platte zueinander hinsichtlich Zeit und Ausmaß synchron sind. Erst wenn die Sauger 43 der Gruppe 42 die auf das Förderband 70 übergebene Platte vollständig losgelassen hat, stoppt das Band 41 des Plattenlegers 40 und schwenkt mit seinem aufnahmeseitigen Ende zu dem Plattenstapel 10 nach unten, um die nächste Platte vom Plattenstapel 10 aufzunehmen.

Das Förderband 70 läuft synchron zum Maschinentakt und transportiert Platten zu bzw. durch weitere Bearbeitungsstationen (Doppelplattenerkennung, Fahnenbürsten, u.dgl.). Die Schwenkbewegungen und der Vorschub des Plattenlegers 40 können sich mit dem Ziel eines Zeitgewinns überlagern.

Die zuvor allgemein erläuterte Ausführungsform einer Vorrichtung gemäß der Erfindung wird nachstehend in weiteren Einzelheiten erläutert:

Eine erfindungsgemäße Vorrichtung, wie sie in Fig. 1 bis 3 beispielhaft gezeigt ist, besitzt den Förderer 20 (Horizontalförderer) zum Heranfördern von Stapeln 10 aus Platten, insbesondere positiven und/oder negativen (Blei-)Platten für Batterien und Akkumulatoren, und eine im Anschluss an dieses Förderband 20 (Stapelzubringerband) angeordnete Vorrichtung 30 (unterer Hebetisch) zum Anheben von Stapeln 10 zu einer Vereinzelungsstation mit dem Plattenleger 40 und der Vorrichtung 60 zum Vereinzeln von Platten. Im Anschluss an die Vereinzelungsstation ist das Förderband 70 der weiteren Fördereinrichtung vorgesehen, mit welchem die in der Vereinzelungsstation vereinzelten Platten weiteren Anlageteilen (nicht gezeigt) zugeführt werden können.

Die einzelnen Baugruppen der Vorrichtung werden nachstehend beschrieben:

Der Horizontalförderer 20 (Stapelzubringerband) ist beispielsweise ein Riemen- oder Kettenförderer mit im Ausführungsbeispiel drei Förderelementen 22 (Riemen oder Ketten), auf deren im Bereich des in Fig. 1 links liegenden Endes der oberen Trume der Förderelemente 22, die sich in Fig. 1 nach rechts bewegen, von einer beliebigen Vorrichtung 23 Stapel 10 aus Platten aufgesetzt werden. Den oberen Trumen der Förderelemente 22 des Horizontalförderers 20 sind zwei Hebevorrichtungen 21 zugeordnet, auf dem Horizontalförderer 20 angeordnete Stapel 10 von den Förderelementen 22 zum Anhalten der Stapel 10 abheben können, so dass diese geordnet und mit Abstand voneinander zu der Hebevorrichtung 30 (Hebetisch, unten), die am abgabeseitigen Ende des Horizontalförderers 20 angeordnet ist, zugeführt werden können.

Die Hebevorrichtung besitzt einen unteren Hebetisch 30, der in seiner unteren Ausgangslage im unteren Bereich, also im wesentlichen in der Höhe der oberen Trume der Förderelemente 22 des Horizontalförderers 20 angeordnet ist. Dieser untere Hebetisch 30 besitzt im Ausführungsbeispiel fünf Hebeelemente 33, die zwischen bzw. seitlich neben den Förderelementen 22 (Ketten, Bänder oder Riemen) des Horizontalförderers 20 nach oben anhebbar sind.

Der zweite, obere Hebetisch 50 der Hebevorrichtung 50 ist im oberen Bereich der Hebevorrichtung angeordnet. Der zweite Hebetisch 50 umfasst an Armen 52 montiert, verschwenkbare Halteklappen 51, die, wie in Fig. 1 angedeutet, unter Federbelastung nach innen schwenken, sobald ein Plattenpaket 10 vom Hebetisch 30 so weit angehoben worden ist, dass die unterste Platte die Halteklappen 51 freigibt. Sobald dies geschehen ist, wird der Plattenstapel 10 vom oberen Hebetisch 50 taktweise weiter angehoben, wie dies nachstehend noch beschrieben werden wird. Inzwischen kann der untere Hebetisch 30 wieder nach unten bewegt werden, von ihm ein weiteres Plattenpaket 10 übernommen und angehoben werden, bis es unter Wegschwenken der Halteklappen 51 der zweiten Hebeanordnung 50 von unten her am zuvor angehobenen vom oberen Hebetisch 50 gehaltenen Plattenstapel 10 anliegt..

Die Steuerung der Bewegungen des unteren Hebetisches 30 und des oberen Hebetisches 50 erfolgt mit Hilfe von Sensoren, welche die Schwenklage der Halteklappen 51 erfassen.

Auf diese Art und Weise können Stapel 10 in der Hebevorrichtung vom unteren Hebetisch 30 angehoben werden, bis die oberste Platte in der Entnahmeposition angeordnet ist. Wenn ein Teil der Platten aus dem Stapel 10 entnommen worden, dieser also teilweise abgearbeitet worden ist, schwenken die Halteklappen 51 des oberen Hebetisches 50 nach innen und halten den teilweise abgearbeiteten Stapel 10, so dass der untere Hebetisch 30 abgesenkt werden kann und der inzwischen kleinere Stapel 10 vom oberen Hebetisch 50 übernommen wird und von diesem schrittweise weiter in Richtung auf den Plattenleger 40 der Vereinzelungsstation angehoben werden kann.

Durch das Zusammenspiel des unteren Hebetisches 30, und den in die Hebebahn vor- und zurückschwenkbaren Halteklappen 50 des oberen, ebenfalls nach oben anhebbaren Hebetisches 50 ist ein kontinuierliches Zuführen von Platten in die Entnahmeposition der Vereinzelungsstation möglich.

Im oberen Ende des angehobenen Plattenstapels 10 ist als Plattenleger 40 das mit Saugern 43 bestückte endlose Band 41 angeordnet. Das endlose mit Saugern 43 bestückte Band 41 ist in einem Bauteil geführt, der um eine mit Abstand vom Stapel 10 angeordnete Achse verschwenkbar ist. Zum Verschwenken des als Plattenleger 40 dienenden, mit den Saugern 43 bestückten Bandes 41 ist ein Exzenterantrieb 45 vorgesehen, der mit Hilfe einer Pleuelstange 46 mit dem Ende des Trägers für das Förderband 41 gekuppelt ist.

In dem gezeigten Ausführungsbeispiel sind an dem Band 41 des Plattenlegers 40 mehrere, voneinander beabstandete Gruppen 42 zu vorzugsweise je vier Saugern 43 vorgesehen, die über ein Gehäuse 47 mit Unterdruck beaufschlagt werden, wenn sie sich in dem Bereich zwischen dem oberen Ende des Stapels 10 und dem Anfang des weiteren Förderbandes 70 bewegen.

Wie insbesondere Fig. 6 zeigt, ist die gegenseitige Zuordnung des mit den Saugern 43 bestückten Bandes 41 des Plattenlegers 40 einerseits und des Förderbandes 70 anderseits so gewählt, dass eine Platte von den Saugern 43 und dem aufgabeseitigen Ende des Förderbandes 70 - beide bewegen sich mit identischer Geschwindigkeit - kurzfristig geklemmt wird, sodass eine Platte beim Auflegen auf das aufgabeseitige Ende des Förderbandes 70 nicht frei ist, sondern definiert übergeben wird. So wird die zu übergebende Platte kurz zwischen den Saugern 43 des Bandes 41 des Plattenlegers 40 einerseits und dem aufgabeseitigen Ende des Förderbandes 70 anderseits geklemmt. So wird sichergestellt, dass Platten nicht schief oder unkontrolliert auf das Förderband 70 übergeben werden.

Für den Antrieb des unteren Hebetisches 30 ist ein von einem Servomotor angetriebener Hub-Spindelantrieb vorgesehen. Auch für den Hebetisch 50 mit den Halteklappen 51 ist ein Hub-Spindelantrieb 53 vorgesehen.

Für die Bewegungen der Hebetische 30 und 50 der Hebeeinrichtung können auch Antriebe mit Endlosgliedern (Ketten, Riemen, Zahnriemen,'eile u.dgl.) Vorgesehen sein, wobei die Hebetische 30 und 50 mit den ihnen jeweils zugeordneten Endlosgliedern gekuppelt sind. Für das Bewegen der Endlosglieder beider Antriebe können Motoren, z.B. Servomotore, vorgesehen sein. '

Um sicherzustellen, dass durch den Plattenleger 40 jeweils nur eine Platte vom Stapel 10 abgehoben wird, ist der Vereinzelungsstation eine Vorrichtung zur Plattenvereinzelung 60 zugeordnet. Diese Plattenvereinzelung 60 besitzt einen vor- und zurückschiebbaren Finger, und einen mit Abstand gleich der Plattendicke unter dem Finger angeordneten Teller, der ebenfalls vor- und zurückschiebbar ist.

Ein Stapel 10 wird entweder vom unteren Hebetisch 30 oder vom oberen Hebetisch 50 mit den Halteklappen 51 so weit angehoben, dass die oberste Platte von unten her an dem vorgeschobenen Finger der Plattenvereinzelung 60 anliegt. Sobald dies geschehen ist, wird der Teller vorgeschoben und dringt in den Spalt zwischen der obersten und der nächst unteren Platte ein, so dass die obere Platte von der darunter befindlichen Platte sicher getrennt wird und vom Plattenleger 40 mit Hilfe seiner Saugköpfe 43 abgehoben und wie beschrieben auf das Förderband 70 abgelegt werden kann.

Zusammenfassend kann ein Ausführungsbeispiel wie folgt beschrieben werden:

Eine Vorrichtung zum Vereinzeln von Batterie- oder Akkumulatorplatten besitzt einen Zuführförderer 20 für Plattenstapel 10 eine Hebeeinrichtung mit zwei unabhängig voneinander betätigbaren Hebetischen 30 und 50, um einen Plattenstapel 10 in den Bereich einer Entnahmestellung anzuheben. In der Entnahmestellung ist ein Plattenleger 40 vorgesehen, der mit einem endlos umlaufenden, mit Saugköpfen 43 bestückten Förderband 41 ausgestattet ist. Dem abgabeseitigen Ende des Förderbandes 41 des Plattenlegers 40 ist ein weiteres Förderband 70 zugeordnet, wobei das aufnahmeseitige Ende des Förderbandes 70 mit dem abgabeseitigen Ende des Förderbandes 41 des Plattenlegers 40 überlappt. Das Förderband 41 des Plattenlegers 40 ist um eine im Bereich des aufgabeseitigen Endes des weiteren Förderbandes 70 angeordnete Achse verschwenkbar, derart, dass sein aufnahmeseitiges Ende vom Plattenstapel 10 abgehoben und diesem angenähert werden kann. Dabei wird eine Platte beim Übergeben vom Plattenleger 40 auf das weitere Förderband 70 zwischen dem weiteren Förderband 70 und den Saugern 43 am Band 41 des Plattenlegers 40 geklemmt, sodass eine kontrollierte Abgabe möglich ist. Dem oberen Ende eines Stapels 10, der durch Entnahme von Platten abgearbeitet wird, ist weiters eine Plattenvereinzelungsvorrichtung 60 zugeordnet, die sicherstellt, dass jeweils nur die oberste Platte abgehoben wird.

## Patentansprüche

1. Vorrichtung zum Vereinzeln von plattenförmigen Gegenständen, insbesondere Batterie- oder Akkumulatorplatten, wobei der jeweils oberste plattenförmige Gegenstand aus einem im Wesentlichen lotrecht ausgerichteten Stapel (10) von im Wesentlichen horizontal liegenden plattenförmigen Gegenständen entnommen und an einer anderen Stelle abgesetzt wird, mit einem Plattenleger (40), der als länglicher Förderer (41) ausgebildet ist, der an seinem abgabeseitigen Ende um eine horizontale Achse verschwenkbar gelagert und an seinem dem Stapel (10) zugeordneten Aufnahmeende zwischen einer oberen Förderstellung und einer unteren Abnahmestellung hin und her bewegbar ist, und mit einer lotrecht bewegbaren Hebeeinrichtung (30, 50), mit welcher Stapel (10) zu dem Aufnahmeende des Plattenlegers (40) während der fortschreitenden Abnahme plattenförmiger Gegenstände aus dem Stapel (10) anhebbar sind; wobei das abgabeseitige Ende des Förderers (41) des Plattenlegers (40) mit einer weiteren Fördereinrichtung (70) für den Abtransport vereinzelter plattenförmiger Gegenstände überlappend angeordnet ist, **dadurch gekennzeichnet, dass** die Hebeeinrichtung zwei übereinander angeordnete Hebetische (30, 50) aufweist; und dass der obere Hebetisch (50) federbelastete Schwenkklappen (51) aufweist, die von unten her an zwei gegenüberliegende Ränder eines untersten plattenförmigen Gegenstandes eines Stapels (10) anlegbar sind.

2. Vorrichtung nach Anspruch 1, **dadurch gekennzeichnet, dass** die weitere Fördereinrichtung (70) ein Förderband, das wenigstens ein endlos umlaufendes Förderglied aufweist, ist.

3. Vorrichtung nach Anspruch 1 oder 2, **dadurch gekennzeichnet, dass** ein plattenförmiger Gegenstand zwischen dem Förderer (41) des Plattenlegers (40) und dem synchron bewegten weiteren Förderer (70) im Moment seiner Übergabe vom Förderer (41) auf den weiteren Förderer (70) geklemmt ist.

4. Vorrichtung nach einem der Anspruche 1 bis 3, **dadurch gekennzeichnet, dass** der erste Förderer (41), der plattenförmige Gegenstände einzeln vom Stapel (10) abnimmt, ein mit Saugern (43), die in Gruppen (42) angeordnet sind, bestücktes Förderband (41) aufweist.

5. Vorrichtung nach einem der Ansprüche 1 bis 4, **dadurch gekennzeichnet, dass** zum Verschwenken des aufnahmeseitigen Endes des Förderers (41) ein Exzenterantrieb (45, 46) vorgesehen ist.

6. Vorrichtung nach Anspruch 5, **dadurch gekennzeichnet, dass** der Exzenterantrieb von einem Servomotor (45) angetrieben ist, der mittels einer Pleuelstange (46) mit dem freien Ende des Förderers (41) gekuppelt ist.

7. Vorrichtung nach einem der Ansprüche 1 bis 6, **dadurch gekennzeichnet, dass** der Antrieb (44) des Förderers (41) für einen intermittierenden Antrieb des Förderers (41), insbesondere dessen Förderbandes, eingerichtet ist.

8. Vorrichtung nach einem der Ansprüche 1 bis 7, **dadurch gekennzeichnet, dass** der Förderer (41) nach dem Absenken seines aufnahmeseitigen Endes in Richtung auf die oberste Platte eines Stapels (10) hin stillsetzbar ist.

9. Vorrichtung nach einem der Ansprüche 1 bis 8, **dadurch gekennzeichnet, dass** der untere Hebetisch (30) im Wesentlichen lotrecht anhebbar ist.

10. Vorrichtung nach einem der Ansprüche 1 bis 9, **dadurch gekennzeichnet, dass** der obere Hebetisch (50) im Wesentlichen lotrecht anhebbar ist.

11. Vorrichtung nach einem der Ansprüche 1 bis 10, **dadurch gekennzeichnet, dass** der untere Hebetisch (30) von unten an die unterste Platte eines Stapels (10) anhebbare Hebeglieder (33) aufweist.

12. Vorrichtung nach Anspruch 11, **dadurch gekennzeichnet, dass** die Hebeglieder (33) des unteren Hebetisches (30) zwischen bzw. neben Förderelementen (22) eines Zuführförderers (20) für Plattenstapel (10) zu der Hebeeinrichtung (30, 50) angeordnet sind.

13. Vorrichtung nach einem der Ansprüche 1 bis 12, **dadurch gekennzeichnet, dass** die Schwenkklappen (51) in ihre einen Stapel (10) im Bereich des untersten plattenförmigen Gegenstandes untergreifende Stellung federbelastet sind.

14. Vorrichtung nach einem der Ansprüche 1 bis 13, **dadurch gekennzeichnet, dass** Sensoren vorgesehen sind, welche die Schwenkstellung der Schwenkklappen (51) erfassen und entsprechende Signale für das Betätigen der Hebetische (30 und 50) abgeben.

15. Vorrichtung nach Anspruch 14, **dadurch gekennzeichnet, dass** bei eingeschwenkten, einen Stapel (10) untergreifenden Schwenkklappen (51) der obere Hebetisch (50) im Sinne eines Anhebens eines Stapels (10) angesteuert ist.

16. Vorrichtung nach einem der Ansprüche 1 bis 15, **dadurch gekennzeichnet, dass** der Förderer (41) des Plattenlegers (40) intermittierend antreibbar ist.

17. Vorrichtung nach einem der Ansprüche 1 bis 16, **dadurch gekennzeichnet, dass** das Förderband (41) des Förderers des Plattenlegers (40) und das Förderband des zweiten Förderers (70) synchron antreibbar sind.

18. Vorrichtung nach einem der Ansprüche 1 bis 17, **dadurch gekennzeichnet, dass** der Förderer (41) des Plattenlegers (40) und der weitere Förderer (70) einander im Bereich ihrer überlappenden Enden angenähert sind, wenn eine Platte übergeben wird, indem das Förderband des Förderers (41) mit seinem freien Ende nach unten hin verschwenkt ist.

## Claims

1. Apparatus for separating plate-shaped objects, in particular battery or accumulator plates, wherein the respective uppermost plate-shaped object is removed from a stack (10) of substantially horizontal plate-shaped objects, which stack is arranged substantially vertically, and is placed down at a different location, with a plate layer (40) that is configured as an elongate conveyor (41), that is mounted so as to pivot on its release-side end about a horizontal axis, and furthermore the uptake-side end of which that is associated with the stack (10) can be moved back and forth between an upper conveying position and a lower removal position, and with a vertically moveable lifting device (30, 50) with which stacks (10) can be lifted to the uptake-side end of the plate layer (40) during the ongoing taking of plate-shaped objects off the stack (10), wherein the release-side end of the conveyor (41) of the plate layer (40) is arranged so as to overlap an additional conveying device (70) for the removal of individual plate-shaped objects, **characterised in that** the lifting device has two lifting tables (30, 50) arranged one above the other, and **in that** the upper lifting table (50) has spring-loaded pivoting flaps (51) that can be mounted from beneath on two opposing edges of a lowermost plate-shaped object of a stack (10).

2. Apparatus according to claim 1, **characterised in that** the additional conveying device (70) is a conveyor belt that has at least one continuously circulating conveying member.

3. Apparatus according to claim 1 or claim 2, **characterised in that** a plate-shaped object is clamped between the conveyer (41) of the plate layer (40) and the synchronously moved additional conveyor (70) in the moment of its transition from the conveyor (41) onto the additional conveyor (70).

4. Apparatus according to one of claims 1 to 3, **characterised in that** the first conveyor (41), which takes plate-shaped objects individually off the stack (10), has a conveyor belt (41) that is equipped with suction devices (43) that are arranged in groups (42).

5. Apparatus according to one of claims 1 to 4, **characterised in that** an eccentric drive (45, 46) is provided to pivot the uptake-side end of the conveyor (41).

6. Apparatus according to claim 5, **characterised in that** the eccentric drive is driven by a servo motor (45) that is coupled to the free end of the conveyor (41) by means of a connecting rod (46).

7. Apparatus according to one of claims 1 to 6, **characterised in that** the drive (44) of the conveyor (41) is equipped to intermittently drive the conveyor (41), in particular its conveyor belt.

8. Apparatus according to one of claims 1 to 7, **characterised in that** the conveyor (41) can be switched off subsequent to the lowering of its uptake-side end in the direction toward the top of the uppermost plate of a stack (10).

9. Apparatus according to one of claims 1 to 8, **characterised in that** the lower lifting table (30) can be raised substantially vertically.

10. Apparatus according to one of claims 1 to 9, **characterised in that** the upper lifting table (50) can be raised substantially vertically.

11. Apparatus according to one of claims 1 to 10, **characterised in that** the lower lifting table (30) has lifting elements (33) that can be lifted from the bottom up to the lowermost plate of a stack (10).

12. Apparatus according to claim 11, **characterised in that** the lifting elements (33) of the lower lifting table (30) are arranged between or beside conveying elements (22) of a supply conveyor (20) for plate stack (10) to the lifting device (30, 50).

13. Apparatus according to one of claims 1 to 12, **characterised in that** the pivoting flaps (51) are spring loaded in their one stack (10) in the position of the region of engaging from beneath the lowermost plate-shaped object.

14. Apparatus according to one of claims 1 to 13, **characterised in that** sensors are provided that determine the pivot position of the pivot flaps (51) and deliver corresponding signals for the actuation of the lifting tables (30 and 50).

15. Apparatus according to claim 14, **characterised in that** in case of pivoting flaps (51) being pivoted in and engaging a stack (10) from beneath, the upper lifting table (50) is driven so as to lift a stack (10).

16. Apparatus according to one of claims 1 to 15, **characterised in that** the conveyor (41) of the plate layer (40) can be driven in an intermittent manner.

17. Apparatus according to one of the claims 1 to 16, **characterised in that** the conveyor belt (41) of the conveyor of the plate layer (40) and the conveyor of the second conveyor (70) can be driven synchronously.

18. Apparatus according to one of claims 1 to 17, **characterised in that** the conveyor (41) of the plate layer (40) and the additional conveyor (70) are brought near to one another in the region of their overlapping ends upon delivery of a plate by means of the free end of the conveyor belt of the conveyor (41) being pivoted downward.

## Revendications

1. Dispositif pour la séparation d'objets en forme de plaques, en particulier des plaques de batterie ou d'accumulateur, dans lequel l'objet en forme de plaque situé à chaque fois tout en haut est prélevé d'une pile (10) orientée essentiellement verticalement d'objets en forme de plaques disposés essentiellement horizontalement, et déposé à un autre endroit, avec un poseur de plaques (40) conçu comme un transporteur oblong (41), monté de façon pivotante autour d'un axe horizontal à son extrémité côté dépôt et déplaçable entre une position haute de déplacement et une position basse de retrait à son extrémité de réception attribuée à la pile (10), et avec un dispositif de levage (30, 50) déplaçable verticalement, avec lequel des piles (10) peuvent être soulevées en direction de l'extrémité de réception du poseur de plaques (40), pendant la poursuite du retrait d'objets en forme de plaques à partir de la pile (10), l'extrémité côté dépôt du transporteur (41) du poseur de plaques (40) étant disposé en superposition avec un autre dispositif de transport (70) pour l'évacuation d'objets en forme de plaques isolés, **caractérisé en ce que** le dispositif de levage comporte deux tables de levage (30, 50) disposées l'une pardessus l'autre, et **en ce que** la table de levage du haut (50) comporte des rabats pivotants (51) sollicités par ressort, capables de s'appliquer par en-dessous sur deux bords opposés d'un objet en forme de plaque situé tout en bas d'une pile (10).

2. Dispositif selon la revendication 1, **caractérisé en ce que** l'autre dispositif de transport (70) est une bande transporteuse comportant au moins un organe de transport sans fin circulant.

3. Dispositif selon la revendication 1 ou 2, **caractérisé en ce qu'**un objet en forme de plaque est coincé entre le transporteur (41) du poseur de plaques (40) et l'autre transporteur (70) déplacé de façon synchrone, au moment de la remise par le transporteur (41) à l'autre transporteur (70).

4. Dispositif selon l'une des revendications 1 à 3, **caractérisé en ce que** le premier transporteur (41), qui prélève des objets en forme de plaques à partir de la pile (10), comporte une bande transporteuse (41) équipée d'organes aspirants (43) disposés en groupes (42).

5. Dispositif selon l'une des revendications 1 à 4, **caractérisé en ce que** pour le pivotement de l'extrémité côté réception du transporteur (41), il est prévu un entraînement excentrique (45, 46).

6. Dispositif selon la revendication 5, **caractérisé en ce que** l'entraînement excentrique est entraîné par un servomoteur (45) accouplé à l'extrémité libre du transporteur (41) au moyen d'une bielle (46).

7. Dispositif selon l'une des revendications 1 à 6, **caractérisé en ce que** l'entraînement (44) du transporteur (41) est conçu pour un entraînement par intermittence du transporteur (41), en particulier de sa bande transporteuse.

8. Dispositif selon l'une des revendications 1 à 7, **caractérisé en ce que** le transporteur (41) peut être arrêté après l'abaissement de son extrémité côté réception en direction de la plaque située tout en haut d'une pile (10).

9. Dispositif selon l'une des revendications 1 à 8, **caractérisé en ce que** la table de levage du bas (30) peut être relevée essentiellement verticalement.

10. Dispositif selon l'une des revendications 1 à 9, **caractérisé en ce que** la table de levage du haut (50) peut être relevée essentiellement verticalement.

11. Dispositif selon l'une des revendications 1 à 10, **caractérisé en ce que** la table de levage du bas (30) comporte des organes de levage (33) susceptibles d'être appliqués par en-dessous contre la plaque située tout en bas d'une pile (10).

12. Dispositif selon la revendication 11, **caractérisé en ce que** les organes de levage (33) de la table de levage du bas (30) sont disposés entre les ou à côté des éléments de transport (22) d'un transporteur d'alimentation (20) de piles de plaques (10) vers le dispositif de levage (30, 50).

13. Dispositif selon l'une des revendications 1 à 12, **caractérisé en ce que** les rabats pivotants (51) sont sollicités par ressort dans leur position engageant une pile (10) par en-dessous, dans la région de l'objet en forme de plaque situé tout en bas.

14. Dispositif selon l'une des revendications 1 à 13, **caractérisé en ce que** des capteurs sont prévus pour détecter la position de pivotement des rabats pivotants (51) et délivrer des signaux correspondants pour activer les tables de levage (30 et 50).

15. Dispositif selon la revendication 14, **caractérisé en ce que** lorsque les rabats pivotants (51) sont rabattus vers l'intérieur et viennent en prise sous une pile (10), la table de levage du haut (50) est activée pour le levage d'une pile (10).

16. Dispositif selon l'une des revendications 1 à 15, **caractérisé en ce que** le transporteur (41) du poseur de plaques (40) peut être entraîné par intermittence.

17. Dispositif selon l'une des revendications 1 à 16, **caractérisé en ce que** la bande transporteuse (41) du transporteur du poseur de plaques (40) et la bande transporteuse du deuxième transporteur (70) peuvent être entraînées de façon synchrone.

18. Dispositif selon l'une des revendications 1 à 17, **caractérisé en ce que**, lorsqu'une plaque est délivrée, le transporteur (41) du poseur de plaques (40) et l'autre transporteur (70) sont rapprochés l'un de l'autre à proximité de leurs extrémités superposées, du fait que la bande transporteuse du transporteur (41) pivote vers le bas à son extrémité libre.
